# EUROPEAN PATENT APPLICATION

(11) **EP 4 163 263 A1**
(43) Date of publication of application: **12.04.2023**
(21) Application number: 20943101.4
(22) Date of filing: 30.06.2020
(51) Int. Cl.: C04B 24/00, C04B 24/04, C04B 24/24, C04B 103/30, B01J 13/16

(54) **MICROCAPSULE TYPE POLYCARBOXYLATE SUPERPLASTICIZER AND PREPARATION METHOD THEREFOR**

(30) Priority: 29.06.2020 CN 202010611538
(71) Applicant: Sobute New Materials Co., Ltd., Nanjing, Jiangsu 211100 (CN)
(72) Inventor: RAN, Qianping, Nanjing, Jiangsu 210000 (CN); HUANG, Zhen, Nanjing, Jiangsu 210000 (CN); YANG, Yong, Nanjing, Jiangsu 210000 (CN); SHU, Xin, Nanjing, Jiangsu 210000 (CN); ZHOU, Dongliang, Nanjing, Jiangsu 210000 (CN); WANG, Tao, Nanjing, Jiangsu 210000 (CN); YAN, Han, Nanjing, Jiangsu 210000 (CN); LIU, Jiaping, Nanjing, Jiangsu 210000 (CN)
(74) Representative: Noréns Patentbyrå AB
(86) International application number: PCT/CN2020/099413
(87) International publication number: WO 2022/000304

(57) **Abstract**

A microcapsule type polycarboxylate superplasticizer and a preparation method thereof. The microcapsule type polycarboxylate superplasticizer is a polycarboxylic acid aqueous solution encapsulated by a closed capsule, and the closed capsule is an organic/inorganic composite shell layer of calcium ion gel of sodium alginate or gelatin, and calcium carbonate. The organic/inorganic composite shell layer is obtained through diffusion-interface reaction of sodium alginate or gelatin, calcium salt and urea under the catalysis of urease. The microcapsule type polycarboxylate superplasticizer meets requirement of long-term and stable slump retaining of concrete in some special engineering. The preparation method has simple processes, free of organic solvent, and has high encapsulating efficiency. The microcapsule type polycarboxylate superplasticizer utilizes the protective effect and swelling effect of the capsule shell layer to slowly release the polycarboxylate superplasticizer to supplement adsorption at a later stage, so as to achieve the object of long-term and stable slump retaining.

## Description

### CROSS-REFERENCE TO RELATED APPLICATIONS

The present application claims the benefit of the priority of Chinese Patent Application No. 202010611538.1, entitled "MICROCAPSULE TYPE POLYCARBOXYLATE SUPERPLASTICIZER AND PREPARATION METHOD THEREOF", and filed on June 29, 2020, the content of which is incorporated herein by reference in its entirety.

### TECHNICAL FIELD

The present application relates to the field of concrete admixture, and in particular, to a microcapsule type polycarboxylate superplasticizer and a preparation method therefor.

### BACKGROUND

With the rapid development of National economy, the demand of commercial concrete is increasing. In recent years, in order to meet the requirements of the ecological environment, concrete always needs to be transported from a mixing station to a construction site by mixer trucks. However, the cement will undergo a hydration reaction as time elapses, flocculation will be generated among particles, and a system of the cement gradually loses fluidity, which causes great inconvenience to site construction.

For the above problem, currently a method of compounding reactive polymer, i.e., polycarboxylate slump retaining agent, is generally used. The reactive polymer mainly include polycarboxylate slump retaining agent prepared by carboxyl protection technology and intermolecular crosslinking technology, between which the carboxyl protection technology is more mature.

Patents CN 201210513890.7, CN 201510930837.0, EP 0931799, US 20080295741, and US 20060266977 all adopted carboxyl protection technology. The main principle of the carboxyl protection technology is to introduce protective groups, such as hydroxyalkyl acrylate into a main chain of the polycarboxylic acid molecule, such that the molecular adsorption groups have a very low density, and mainly dissolving in a water phase at an early stage, thus the adsorption is little; then, in an alkaline environment of a cement pore solution, the alkyl ester undergoes hydrolysis reaction to generate more carboxylate adsorption groups, which are continuously replenished and adsorbed to surfaces of cement particles, and provide dispersing ability continuously. By adjusting a proportion of protective groups, and controlling a molecular weight, etc., the hydrolysis rate can be controlled, and then polymer molecules with different slump retaining properties can be obtained.

Intermolecular cross-linking technology adopts cross-linking monomers containing two or more double bonds to carry out free radical copolymerization and micro-cross-linking with monomers, such as polyether macromonomers and unsaturated acids. These cross-linking locations will be cracked gradually in an alkaline environment, releasing small molecule water reducing agents for continuous adsorption of cement particles. Patents CN 200510037869.4, CN 201010617174.4, CN 201480062215.4, EP 0619277, and US 5362324, etc. all adopt this technology. However, in comparison, as cross-linking reaction is more difficult to control, performance of the slump retaining agent prepared by this technology is difficult to control. At present, this method has been applied less and less.

Although the above-mentioned technologies have been able to meet slump retaining requirements for conventional concrete, it is relatively easy to perform hydrolysis of the above protective groups, such as hydroxyalkyl esters in a strong alkaline environment, and there is a concentrated release of the small molecule water reducing agents, which is difficult to sustain afterward, the current slump retaining technology is still helpless for ultra-long-term and stable slump retaining requirements of some special engineering concretes. Therefore, there is an urgent need for a polycarboxylate slump retaining agent with long-term and stable slump retaining capabilities in the market.

Patent CN 201110199695.7 provides a new idea, which microencapsulates conventional water reducing agent molecules through mini-emulsion reversed phase polymerization. Due to the capsule shell layer, the water reducing agent molecules can be stably stored in the microcapsules. When mixed with cement, the cement concrete is strongly basic, the microcapsules swell, the shell layer changes from a dense structure to a loose structure, and encapsulated water reducing agent molecules are released slowly, such that the cement concrete always maintains a high concentration of water reducing agent, so as to achieve the purpose of improving fluidity of the water reducing agent over time and preventing the loss of cement concrete slump in actual engineering practice.

Patent CN201310751918.5 adopts a similar idea. Carriers with pores are stirred and dispersed in a concrete admixture solution for fully soaking, followed by centrifugal filtration, and drying to obtain a slow-release microcapsule-type concrete admixture. When the carriers with pores are fully soaked in the concrete admixture solution, some of the concrete admixture molecules enter the pores of the carrier, and some of the concrete admixture molecules are adsorbed on a surface of carrier particles to form a slow-release microcapsule concrete admixture.

It can be seen that by forming a capsule-type superplasticizer, due to the protective effect of the capsule shell layer and swelling effect in an cement environment, the polycarboxylate superplasticizer can be released more slowly, which supplements the adsorption at a later time so as to achieve long-term effect of slump retaining. However, there also exist some defects in the above method. For example, patent CN 201110199695.7 adopts a large number of organic solvents in the process of preparing capsule-type superplasticizers, therefore, recycling of the solvents increases additional production costs and environmental costs. Patent CN 201310751918.5 adopts a method of soaking the carrier, and followed by a drying, which results in more steps, and there are more polycarboxylate superplasticizers adsorbed on the surface of the carrier, and cannot be effectively encapsulated to form a closed capsule, and will be released slowly in an aqueous solution, therefore, the application scope is narrow.

Patent CN 201780010568.3 discloses a method for preparing microcapsules. Firstly, salt is added to an aqueous system containing a water-soluble polymer to form an aqueous two-phase system, and then monomers are added to undergo free radical polymerization in the two-phase system to form shell layers which embed various enzymes and active substances to increase stability of the enzyme. The synthetic shell layer is generally polymerized with alkyl acrylate or hydroxyalkyl acrylate, which lacks long-term stability in aqueous solution, which requires stabilizer or spray drying.

### SUMMARY

This object of the present application is to provide a microcapsule type polycarboxylate superplasticizer and a preparation method thereof to solve the requirement long-term and stable slump retaining of the concrete in some special projects at present. The preparation method has simple processes, does not use any organic solvent, and has high encapsulating efficiency. The microcapsule type polycarboxylate superplasticizer utilizes protective effect and swelling effect of the capsule shell layer to slowly release the polycarboxylate superplasticizer to supplement the adsorption at a later period, so as to achieve the purpose of stable slump retaining for long time.

The present application provides a microcapsule type polycarboxylate superplasticizer. The closed capsule is an organic/inorganic composite shell layer of calcium ion gel of sodium alginate or gelatin, with calcium carbonate. The polycarboxylic acid has long-chain polyether, and a concentration of the polycarboxylic acid in the polycarboxylic acid aqueous solution is 15%-25%.

The organic/inorganic composite shell layer is obtained by means of a diffusion-interface reaction of sodium alginate or gelatin with calcium salt and urea under catalysis of urease.

The diffusion-interface reaction refers to an interfacial reaction of aqueous two-phase, and the aqueous two-phase comprises a polycarboxylate superplasticizer molecular aqueous solution phase and an inorganic salt aqueous solution phase;
A compound inorganic salt is a mixture of at least one of ammonium sulfate, sodium sulfate, lithium sulfate or ammonium chloride, with sodium chloride in any proportion, where a mass concentration of the former is 25% to 35%, and a concentration of the sodium chloride is 3% to 6%.

The urease can catalyze urea to generate carbonate, and further generate calcium carbonate when encountering calcium chloride, thereby forming an organic/inorganic composite with the gel of sodium alginate or gelatin, so as to further enhance the strength of the shell layer. A mass concentration of the urease in the polycarboxylic acid aqueous solution is generally 0.1% to 0.3%.

The above-mentioned compound inorganic salt generally adopts ammonium sulfate, sodium sulfate, lithium sulfate or ammonium chloride, which has the main function of increasing the phase separation degree of polycarboxylic acid aqueous solution and compound inorganic salt aqueous solution, so as to promote the formation of aqueous two-phase.

It is found that the molecular structure of the polycarboxylate superplasticizer contains a large number of (PEG) polyethylene glycol structures. When the polycarboxylate superplasticizer reach an appropriate concentration in an aqueous solution and a certain inorganic salt solution with a specific concentration are added, it will form an aqueous two-phase system in which the aqueous solution of superplasticizer molecules and the inorganic salt solutions are insoluble to each other. Under a condition that high-speed stirring and ultrasound are performed in the presence of an appropriate amount of dispersant, a water-in-water system can be formed with an aqueous solution of inorganic salt as a continuous phase and an aqueous solution of superplasticizer molecules as a dispersed phase. On this basis, through a curing reaction of encapsulation material on an interface between the two phases, an encapsulation layer can be formed to enclose the polycarboxylate superplasticizer inside the capsule, to form the capsule-type polycarboxylate superplasticizer.

Specifically, the preparation reaction of the microcapsule type polycarboxylate superplasticizer of the present application includes the following:
(1) preparing an aqueous solution from a polycarboxylate superplasticizer to be encapsulated, sodium alginate or gelatin, and urease;
(2) preparing an aqueous solution from a compound inorganic salt and a self-made dispersant;
(3) mixing two solutions obtained above in equal mass, conducting a high-speed shearing for half an hour, and ultrasonically emulsifying for 15 minutes, to obtain a water-in-water emulsion; and
(4) slowly dropping an aqueous solution of calcium chloride and urea into the water-in-water emulsion, and reacting for 2 hours after finishing the dropping, to obtain the microcapsule type polycarboxylate superplasticizer.

The above-mentioned polycarboxylate superplasticizer to be encapsulated is commercially available polycarboxylate superplasticizers or polycarboxylate slump retaining agents generally with a mass concentration of 30% to 50%. If a preparation concentration is too low, it is difficult to cause phases separation to form aqueous two-phase, and if the concentration is too high, a viscosity of the system is too high.

Sodium alginate or gelatin is pre-dissolved in the dispersed phase as a precursor of the encapsulation shell layer. When calcium chloride is added, gel reaction occurs between sodium alginate or gelatin and calcium ions at the interface of the dispersed phase to form a capsule shell layer to encapsulate the superplasticizer. A mass concentration of sodium alginate in the polycarboxylic acid aqueous solution is generally 2% to 10%. If the concentration is too low, it is difficult to form a shell layer, and if the concentration is too high, it will easily to cause a homogeneous phase reaction, thereby affecting encapsulating efficiency and causing waste.

A mass concentration of the sodium alginate is 2% to 10% of the polycarboxylic acid aqueous solution, i.e., 1% to 5% of the water-in-water emulsion. An amount of the calcium salt is 0.5% to 1.5% of the water-in-water emulsion, i.e., a proportion of calcium carbonate is 1.25% to 3.75%.

The dispersant is prepared with reference to patent CN 201210491725.6, and a mass concentration thereof is 1% to 5%. The dispersant and the compound inorganic salt can stably form a water-in-water emulsion.

The above-mentioned aqueous solution of calcium salt and urea is prepared with a small amount of water and dropped into the water-in-water emulsion above within 3-5 hours. An amount of the calcium salt is 0.5% to 1.5% of the water-in-water emulsion, and an amount of urea is 0.25% to 1.0% of the water-in-water emulsion. The function of the calcium salt and urea is mainly to migrate to the interface of the dispersed phase through diffusion after being dropped into the system, thereby reacting with sodium alginate or gelatin, and urease to form a capsule shell layer to encapsulate the superplasticizer.

In the present application, polycarboxylate superplasticizer and inorganic salt are used in the presence of a dispersant to form a water-in-water emulsion. The polycarboxylate superplasticizer itself is not only a phase separation agent, but also an active substance to be encapsulated. After that, an interfacial reaction occurs with sodium alginate or gelatin and calcium salt, under the catalysis of urease, to form an organic/inorganic composite shell layer having a certain strength, and polycarboxylic acid is embedded therein, to form a stable aqueous dispersion. This method has high encapsulating efficiency, and utilizes the protective effect and swelling effect of the capsule shell layer to slowly releases the polycarboxylate superplasticizer to supplement the adsorption at a later period, so as to achieve the purpose of maintaining stable slump retaining for a long time.

Compared with the prior art, the present application has the following advantages:
(1) The capsule-type superplasticizer of the present application can slowly release superplasticizer molecules, has a better long-term slump retaining ability, and a fluidity change in a whole process is more stable and controllable.
(2) The release rate of the capsule-type superplasticizer of the present application is less affected by the environment, and there is no need to make more formulation adjustments for different regions when it is in use.
(3) The method of the present application is safe and reliable during an entire preparation process, with simple processes, free of organic solvents, non-toxic and pollution-free, and environmentally friend.

### DESCRIPTION OF EMBODIMENTS

The examples below describe a process of preparing polymeric products in detail according to the method of the present application, and these examples are described for illustration, and the object is to allow those skilled in the art to understand the content of the present application and to implement accordingly, but these examples are not used to limit the scope of the present application. All equivalent changes or modifications made according to the spirit of the present application shall fall within the scope of the present application.

Code names of raw materials used in the Examples and Comparative Examples as shown in table 1:

**Table 1 Code Names of Raw material in Synthesis Examples and Comparative Example**

| code name | monomer name | source |
|---|---|---|
| AMPS | 2-Acrylamido-2-methylpropanesulfonic acid | commercially available |
| A1 | acrylic acid | commercially available |
| A2 | Methacrylate | commercially available |
| A3 | Acryloyloxyethyltrimethylammonium chloride | commercially available |
| A4 | Methacryloyloxyethyltrimethylammonium chloride | commercially available |
| B1 | Allyl polyether (n=5) | commercially available |
| B2 | Methoxypolyethylene glycol monomethacrylate (n=10) | commercially available |
| B3 | Allyl polyether (n=20) | commercially available |
| B4 | Methoxypolyethylene glycol monoacrylate (n=25) | commercially available |
| APS | Ammonium persulfate | commercially available |
| PCE-1 | Water-reducing polycarboxylate superplasticizer (Subote New Materials Co., Ltd.) | commercially available |
| PCE-2 | Slump-retention polycarboxylate superplasticizer (Subote New Materials Co., Ltd.) | commercially available |
| NSF | Naphthalenesulfonic acid formaldehyde condensate high-efficiency water reducing agent (Subote New Materials Co., Ltd.) | commercially available |
| C1 | sodium alginate | commercially available |
| C2 | gelatin | commercially available |
| D1 | ammonium sulfate | commercially available |
| D2 | sodium sulfate | commercially available |
| D3 | lithium sulfate | commercially available |
| D4 | ammonium chloride | commercially available |
| E1 | calcium chloride | commercially available |
| E2 | calcium nitrate | commercially available |

Synthesis Example 1 shows the synthesis method of the dispersant Dsp used in the present application.

### Synthesis Example 1 (Synthesis of Dispersant Dsp-1)

In a glass reactor equipped with a thermometer, a stirrer, a dropping funnel, a nitrogen inlet tube and a reflux condenser, 100 ml of deionized water was added, the glass reactor was purged with nitrogen while stirring, the temperature was heated to 75°C. Then 30 grams (AMPS), 7 grams (A-1) and 5 grams (B-1) and 80 ml of water were prepared a mixed monomer aqueous solution which was dropped into the reactor for 2 hours. At the same time, 20 grams of 10% ammonium persulfate (APS) initiator solution was dropped for 5 hours, after dropping, the temperature was held for 5 hours and then cooled to a room temperature to obtain a dispersant Dsp-1 with a molecular weight of 15000.

### Synthesis Example 2-4 (Synthesis of Dispersant Dsp-2 to Dsp-4)

Dsp-2 to Dsp-4 of the present application were prepared according to the processes in Synthesis Example 1, and materials were fed according to the ratio shown in Table 2.

**Table 2 Feeding Ratio and Molecular Weight during Dispersant Preparation**

| Dispersant No. | Monomer type and its feeding weight (g) | | | | | | Mw |
|---|---|---|---|---|---|---|---|
| Dsp-1 | A-1 | 7 | AMPS | 30 | B-1 | 5 | 15000 |
| Dsp-2 | A-2 | 6.8 | AMPS | 32 | B-2 | 16.2 | 37000 |
| Dsp-3 | A-2 | 33 | AMPS | 16.5 | B-3 | 27.5 | 71000 |
| Dsp-4 | A-1 | 19 | AMPS | 21 | B-4 | 48 | 98000 |

The Examples show the preparation method of the microcapsule type polycarboxylate superplasticizer described in the present application.

### Example 1

60 grams of PCE-1, 7.2 grams of C1 and 0.33 grams of urease were dissolved in 82.47 grams of deionized water and stirred, to form a Solution-A. 38.25 grams of D1, 5.25 grams of sodium chloride and 4.95 grams of Dsp-4 were dissolved in 101.55 grams of deionized water and stirred, to form a Solution-B. The above solution A and solution B were mixed, subjected to a high-speed shearing for half an hour, and then ultrasonically emulsified for 15 minutes, to obtain a water-in-water emulsion Dispersion-C. 2.25 grams of E1 and 1.2 grams of urea were dissolved in 20 grams of water and stirred, to form a Solution-C. The above Solution-C was dropped slowly to the water-in-water emulsion Dispersion-C within 5 hours with continued stirring, and stirring was further continued for 2 hours after the dropping to obtain the microcapsule type polycarboxylate superplasticizer.

### Examples 2-12

Examples 2-12 of the present application were prepared according to the processes of Example 1, and materials were fed and reacted according to the ratio shown in Table 3.

**Table 3 Raw materials and usage amount in Examples 2-12**

| Example | Solution-A | | | | | | Solution-B | | | | | | Solution-C | | | |
|---|---|---|---|---|---|---|---|---|---|---|---|---|---|---|---|---|
| | Polycarboxylic acid | mass | Precursor | mass | Urease | water | Inorganic salt | mass | Sodium chloride | Dispersant | mass | water | calcium salt | mass | urea | water |
| Example 1 | PCE-1 | 60.00 | C1 | 7.20 | 0.33 | 82.47 | D1 | 38.25 | 5.25 | Dsp-4 | 4.95 | 101.55 | E1 | 2.25 | 1.2 | 16.55 |
| Example 2 | PCE-2 | 60.00 | C1 | 8.40 | 0.18 | 81.42 | D1 | 41.70 | 5.25 | Dsp-4 | 4.50 | 98.55 | E1 | 2.55 | 1.2 | 16.25 |
| Example 3 | PCE-1 | 60.00 | C1 | 9.75 | 0.38 | 79.88 | D1 | 42.45 | 5.25 | Dsp-4 | 3.75 | 98.55 | E1 | 1.95 | 2.25 | 15.8 |
| Example 4 | PCE-1 | 60.00 | C1 | 5.25 | 0.38 | 84.38 | D1 | 45.75 | 5.25 | Dsp-4 | 4.20 | 94.80 | E1 | 2.7 | 1.8 | 15.5 |
| Example 5 | PCE-1 | 67.50 | C1 | 12.15 | 0.45 | 69.90 | D2 | 47.55 | 6.75 | Dsp-1 | 1.95 | 93.75 | E1 | 3.3 | 2.7 | 14 |
| Example 6 | PCE-1 | 45.00 | C1 | 4.95 | 0.45 | 99.60 | D3 | 48.75 | 8.25 | Dsp-2 | 420 | 88.80 | E1 | 4.2 | 3 | 12.8 |
| Example 7 | PCE-2 | 52.50 | C1 | 7.05 | 0.23 | 90.23 | D4 | 52.50 | 8.70 | Dsp-3 | 7.05 | 81.75 | E2 | 3.15 | 1.95 | 14.9 |
| Example 8 | PCE-2 | 67.50 | C2 | 12.15 | 0.27 | 70.08 | D1 | 45.15 | 630 | Dsp-4 | 5.70 | 92.85 | E2 | 3.75 | 2.4 | 13.85 |
| Example 9 | PCE-1 | 75.00 | C1 | 15.00 | 0.32 | 59.69 | D2 | 42.30 | 7.05 | Dsp-2 | 5.25 | 95.40 | E2 | 3.45 | 2.7 | 13.85 |
| Example 10 | PCE-1 | 60.00 | C2 | 3.45 | 0.50 | 86.06 | D1 | 45.75 | 6.15 | Dsp-2 | 5.25 | 92.85 | E1 | 2.4 | 2.1 | 15.5 |
| Example 11 | PCE-1 | 60.00 | C2 | 5.10 | 0.41 | 84.50 | D4 | 45.00 | 5.70 | Dsp-2 | 5.25 | 94.05 | E1 | 1.8 | 2.25 | 15.95 |
| Example 12 | PCE-2 | 6000 | C2 | 7.95 | 0.18 | 81.87 | D3 | 4500 | 4.80 | Dsp-2 | 5.25 | 94.95 | E1 | 2.85 | 2.4 | 14.75 |

### Comparative Example

In the comparative example, naphthalenesulfonic acid formaldehyde condensate efficiency water reducer was used as a material to be encapsulated, and the specific processes are as follows: 60 g of NSF efficiency water reducer, 7.2 g of C1 and 0.33 g of urease were dissolved in 82.47 g of deionized water and stirred, to prepare a Solution-A. 38.25 grams of D1, 5.25 grams of sodium chloride and 4.95 grams of Dsp-4 were dissolved in 101.55 grams of deionized water and stirred, to form a Solution-B. The above solution A and solution B were mixed, subjected to a high-speed shearing for half an hour, and then ultrasonically emulsified for 15 minutes. It was found that the system was still a homogeneous aqueous solution, and a water-in-water emulsion could not be obtained.

### Application Examples

### Application Example 1

A total organic carbon analyzer was used to measure adsorption rates at different temperatures of the polycarboxylate superplasticizers prepared in the Examples and Comparative Examples. Specific method was as follows:

100 grams of cement, 100 grams of deionized water and 0.25 grams of polycarboxylate superplasticizer (solid content) were weighed respectively and put in a beaker, a magnet was placed in the beaker to start a magnetic stirring, and the beaker was placed in water baths with different temperature. Samples were taken at different time points (4 minutes /60 minutes /120 minutes /240 minutes) and centrifuged to obtain supernatants. The total organic carbon analyzer was used to measure a carbon content, and in comparison with the blank sample, an actual adsorption rate was obtained by a difference method. Comparative Example 1 shows the adsorption rate of the polycarboxylate superplasticizer PCE-1 purchased from Jiangsu Subote New Material Co., Ltd., and Comparative Example 2 shows the adsorption rate of the polycarboxylate slump retaining agent PCE-2 purchased from Jiangsu Subote New Material Co., Ltd., which adopts carboxyl protection technology.

**Table 4 Adsorption rate on cement particles at different times for capsule type polycarboxylate superplasticizer of Synthesis Examples, and Comparative Examples**

| Example | encapsulated polycarboxylic acid | Adsorption rate | | | | | | |
|---|---|---|---|---|---|---|---|---|
| | | 4 minutes | 30 minutes | 60 minutes | 120 minutes | 180 minutes | 240 minutes | 300 minutes |
| Example 1 | PCE-1 | 4.2% | 5.8% | 13.2% | 27.2% | 46.3% | 48.6% | 51.8% |
| Example 2 | PCE-2 | 3.3% | 4.5% | 9.8% | 20.7% | 38.5% | 42.6% | 49.8% |
| Example 3 | PCE-1 | 5.0% | 7.6% | 10.0% | 28.3% | 43.2% | 48.4% | 51.4% |
| Example 4 | PCE-1 | 3.4% | 7.8% | 13.3% | 28.8% | 46.7% | 49.9% | 51.0% |
| Example 5 | PCE-1 | 3.1% | 6.1% | 14.4% | 30.7% | 42.2% | 48.8% | 49.5% |
| Example 6 | PCE-1 | 3.7% | 5.5% | 12.1% | 31.2% | 44.2% | 51.2% | 48.4% |
| Example 7 | PCE-2 | 3.4% | 6.0% | 10.1% | 19.8% | 36.8% | 43.4% | 51.8% |
| Example 8 | PCE-2 | 2.4% | 5.2% | 10.6% | 20.5% | 36.6% | 41.1% | 50.6% |
| Example 9 | PCE-1 | 3.9% | 7.5% | 10.5% | 26.6% | 43.2% | 50.4% | 50.0% |
| Example 10 | PCE-1 | 4.4% | 6.7% | 12.5% | 30.7% | 44.3% | 48.5% | 51.6% |
| Example 11 | PCE-1 | 3.3% | 6.6% | 13.0% | 27.3% | 46.1% | 49.0% | 48.8% |
| Example 12 | PCE-2 | 3.4% | 5.0% | 9.5% | 16.8% | 38.7% | 41.4% | 50.5% |
| Comparative Example 1 | PCE-1 | 32.9% | 46.9% | 49.8% | 50.5% | 50.0% | 51.0% | 50.3% |
| Comparative Example 2 | PCE-2 | 13.8% | 21.2% | 37.0% | 51.5% | 52.2% | 53.9% | 53.8% |

As shown in the table above, initial adsorption of the capsule type polycarboxylate superplasticizer prepared in the Examples is very low, there is almost no adsorption in the first 30 minutes, and the adsorption gradually increases slowly at 60th minute, indicating that the polycarboxylate superplasticizer gradually begins to seeps from the capsule, and then the adsorption rate gradually increases over time. The capsule-type slump retaining agent encapsulated with PCE-1 reaches the adsorption equilibrium state in about 240 minutes, and the capsule-type slump retaining agent encapsulated with PCE-2 was still able to performed supplementary adsorption in 300 minutes.

Un-encapsulated PCE-1 in Comparative Example 1 is a water-reducing superplasticizer. It can be found that its initial adsorption is very high, and the adsorption equilibrium is basically reached within 30 minutes, and subsequent adsorption is low.

Un-encapsulated PCE-2 in Comparative Example 2 is a slump retaining superplasticizer, and its initial adsorption is low, which is lower than that of water-reducing type PCE-1, but still significantly higher than that of capsule type polycarboxylate superplasticizer, and the adsorption rate thereof also gradually increases over time, the adsorption equilibrium is basically reached within about 120 minutes, and it is difficult to supplement the adsorption continuously.

Therefore, encapsulating the polycarboxylate superplasticizer to form a capsule-type superplasticizer can effectively reduce an early adsorption speed and enhance its supplement ability in a later stage.

### Application Example 2

In order to test the dispersion performance and dispersion retention performance of the capsule-type polycarboxylate slump retaining agent prepared by the present application, a fluidity test of the cement paste was carried out with reference to the GB/T8077-2012 standard. 87g of water was added to cement of 300g and stirred for 4 minutes to measure a fluidity of the cement paste on a flat glass, and test the fluidity of the cement paste at different times. The test results are shown in Table 5.

**Table 5 Dispersibility and dispersion retention performance of Capsule type Polycarboxylate Superplasticizer in the Synthesis Examples and Comparative Examples**

| Cement paste | Dosage (%) | Composite PCE1 | Composite PCE2 | Sodium sugar (%) | Fluidity of cement paste (mm) | | | | | | | |
|---|---|---|---|---|---|---|---|---|---|---|---|---|
| | | | | | 4 minutes | 30 minutes | 60 minutes | 120 minutes | 180 minutes | 240 minutes | 300 minutes | 360 minutes |
| Example 1 | 0.03 | 0.08 | 0.06 | 0.02 | 218 | 254 | 263 | 252 | 233 | 218 | 175 | 134 |
| Example 2 | 0.03 | 0.08 | 0.06 | 0.02 | 219 | 247 | 256 | 251 | 239 | 203 | 168 | 137 |
| Example 3 | 0.03 | 0.08 | 0.06 | 0.02 | 216 | 246 | 262 | 251 | 230 | 205 | 172 | 138 |
| Example 4 | 0.03 | 0.08 | 0.06 | 0.02 | 216 | 245 | 263 | 251 | 237 | 213 | 182 | 141 |
| Example 5 | 0.03 | 0.08 | 0.06 | 0.02 | 223 | 248 | 263 | 247 | 225 | 220 | 165 | 133 |
| Example 6 | 0.03 | 0.08 | 0.06 | 0.02 | 229 | 255 | 261 | 246 | 229 | 210 | 173 | 125 |
| Example 7 | 0.03 | 0.08 | 0.06 | 0.02 | 221 | 250 | 257 | 251 | 228 | 213 | 162 | 126 |
| Example 8 | 0.03 | 0.08 | 0.06 | 0.02 | 219 | 247 | 263 | 254 | 239 | 207 | 177 | 131 |
| Example 9 | 0.03 | 0.08 | 0.06 | 0.02 | 228 | 253 | 255 | 245 | 239 | 207 | 181 | 128 |
| Example 10 | 0.03 | 0.08 | 0.06 | 0.02 | 217 | 254 | 262 | 245 | 242 | 221 | 166 | 130 |
| Example 11 | 0.03 | 0.08 | 0.06 | 0.02 | 229 | 248 | 259 | 251 | 244 | 212 | 159 | 135 |
| Example 12 | 0.03 | 0.08 | 0.06 | 0.02 | 224 | 251 | 258 | 254 | 245 | 206 | 177 | 125 |
| Comparative Example 1 | 0 | 0.08 | 0.06 | 0.02 | 223 | 248 | 215 | 155 | 95 | -- | -- | -- |
| Comparative Example 2 | 0 | 0.11 | 0.06 | 0.02 | 268 | 298 | 260 | 185 | 135 | -- | -- | -- |
| Comparative Example 3 | 0 | 0.08 | 0.09 | 0.02 | 234 | 287 | 288 | 225 | 165 | 108 | -- | -- |

It can be found from the above table that the compounding technology using conventional superplasticizer and slump retaining components (Comparative Example 1) can be used to obtain better initial fluidity and fluidity retention within 2 hours. However, if the slump retaining time is desired to be further extended, increasing a usage amount of the superplasticizer (Comparative Example 2) may cause a significant increase of the initial water reduction, and concrete bleeding will easily occur in an early stage, which will affect the quality of concrete engineering, and contribute less for long-term slump retaining. If the usage amount of slump retaining agent is increased (Comparative Example 3), the slump retaining time can be significantly prolonged at a later stage, but the slump retaining time is shorter than that when capsule-type superplasticizer is added. In addition, the addition of excessive amount of slump retaining agent will cause fluidity to be increased significantly at a medium stage, which causes a serious impact on the construction quality if the concrete bleeding occurs.

The Application Examples show that adding an appropriate amount of capsule-type superplasticizer on the basis of the compounding technology using the conventional superplasticizer and slump retaining component has almost no effect on early dispersion ability, and the dispersion retention ability can be improved after 1 hour, which doesn't cause bleeding risks in an early stage and mid-stage, and the ultra long-term slump retaining ability can be significantly improved, excellent fluidity can be maintained after 5 hours and fluidity has not been completely lost after 6 hours.

## Claims

1. A microcapsule type polycarboxylate superplasticizer, wherein the microcapsule type polycarboxylate superplasticizer is in a form of a polycarboxylic acid aqueous solution encapsulated by a closed capsule;
the closed capsule is an organic/inorganic composite shell layer, and the organic/inorganic composite shell layer is a composite shell layer made from calcium ion gel of sodium alginate or gelatin, and calcium carbonate; and
the polycarboxylic acid comprises long-chain polyether, and a concentration of the polycarboxylic acid aqueous solution is 15%-25%.

2. The microcapsule type polycarboxylate superplasticizer according to claim 1, wherein, the organic/inorganic composite shell layer is obtained by means of a diffusion-interface reaction of sodium alginate or gelatin with calcium salt and urea under catalysis of urease, and
a ratio of the polycarboxylic acid, the sodium alginate or gelatin, and the urease is (30-50):(2-10):(0.1-0.3).

3. The microcapsule type polycarboxylate superplasticizer according to claim 2, wherein, the diffusion-interface reaction refers to an interfacial reaction of aqueous two-phase, and the aqueous two-phase comprises a polycarboxylate superplasticizer molecular aqueous solution phase and an inorganic salt aqueous solution phase;
a compound inorganic salt is a mixture of at least one of ammonium sulfate, sodium sulfate, lithium sulfate or ammonium chloride, with sodium chloride in any proportion, wherein a mass concentration of the at least one of ammonium sulfate, sodium sulfate, lithium sulfate or ammonium chloride is 25% to 35% of the inorganic salt aqueous solution phase, and a mass concentration of the sodium chloride in the inorganic salt aqueous solution is 3% to 6%.

4. A method for preparing the microcapsule type polycarboxylate superplasticizer according to any one of claims 1-3, comprising the following:
(1) preparing an aqueous solution from a polycarboxylate superplasticizer to be encapsulated, sodium alginate or gelatin, and urease;
(2) preparing an aqueous solution from a compound inorganic salt and a dispersant;
(3) mixing two solutions obtained above in equal mass, conducting a high-speed shearing for half an hour, and ultrasonically emulsifying for at least 15 minutes, to obtain a water-in-water emulsion; and
(4) slowly dropping an aqueous solution of calcium salt and urea into the water-in-water emulsion obtained in step (3), and reacting for 2-10 hours after finishing the dropping, to obtain the microcapsule type polycarboxylate superplasticizer;
a concentration of polycarboxylic acid in the polycarboxylic acid aqueous solution is 30% to 50%, a mass concentration of the sodium alginate or gelatin in the polycarboxylic acid aqueous solution is 2% to 10%, and a mass concentration of the urease in the polycarboxylic acid aqueous solution is 0.1% to 0.3%;
a mass concentration of the dispersant in the aqueous solution of the compound inorganic salt is 1% to 5%; an amount of the calcium salt is 0.5% to 1.5% of the water-in-water emulsion, and an amount of the urea is 0.25% to 1.0% of the water-in-water emulsion.
